# EUROPEAN PATENT APPLICATION

(11) **EP 4 765 427 A1**
(43) Date of publication of application: **24.06.2026**
(21) Application number: 25782804.6
(22) Date of filing: 11.03.2025
(51) Int. Cl.: H01M 50/383, H01M 10/04, H01M 50/296, H01M 50/502, H01M 50/211, H01M 50/249

(54) **BATTERY MODULE, AND BATTERY PACK AND VEHICLE INCLUDING SAME**

(30) Priority: 03.04.2024 KR 20240045576
(71) Applicant: LG Energy Solution, Ltd., Seoul 07335 (KR)
(72) Inventor: PARK, Ju-Hun, Daejeon 34122 (KR)
(74) Representative: Plasseraud IP
(86) International application number: PCT/KR2025/003210
(87) International publication number: WO 2025/211601

(57) **Abstract**

The present disclosure relates to a battery module including: a cell assembly including a plurality of battery cells; a bus-bar frame provided on at least one side of the cell assembly; a module case including a body frame configured to cover some sides of the cell assembly, and an end frame coupled to the body frame and configured to cover the bus-bar frame; and a blocking member provided inside a joint between the body frame and the end frame, and configured to cover a portion of the cell assembly.

## Description

### TECHNICAL FIELD

The present disclosure relates to a battery module, and a battery pack and vehicle including the same. More specifically, the present disclosure relates to a battery module capable of effectively delaying thermal runaway.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. In addition, a battery module is configured in a structure in which such battery cells are densely stored inside a module housing. Therefore, if a thermal event occurs in any one of the battery cells, the high-temperature gas and flame discharged therefrom may propagate to adjacent battery cells, potentially causing a chain reaction of battery cell explosions, which poses a significant safety risk.

In particular, when a battery module includes a large number of battery cells, high-temperature gas, flame, or sparks generated during thermal runaway in a specific battery cell are highly likely to be ejected toward the front or rear of adjacent battery modules. As a result, components located at both ends of the battery module, such as components adjacent to the end plate or bus-bar frame, may suffer thermal damage, leading to structural collapse.

Furthermore, since the end plate or bus-bar frame is typically made of materials vulnerable to heat, such as plastic, if flame or heat generated from an adjacent battery module propagates toward the end plate of the battery module, the risk of thermal propagation or chain ignition between modules may further increase. Consequently, the thermal runaway condition may expand to the entire battery pack that includes multiple battery modules.

Therefore, there is a need to develop a structure capable of preventing or appropriately controlling the discharge of high-temperature gases or flames from a battery module when a thermal event occurs in the battery module, thereby delaying thermal runaway between battery cells or battery modules.

### DISCLOSURE

### Technical Problem

The present disclosure is designed to solve the problems of the related art, and therefore the present disclosure is directed to providing a battery module with improved safety and reliability by appropriately controlling high-temperature gases or flames generated in the battery module in the event of an abnormal situation of the battery module and effectively preventing thermal propagation between the battery modules.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a cell assembly comprising a plurality of battery cells; a bus-bar frame provided on at least one side of the cell assembly; a module case comprising a body frame configured to cover some sides of the cell assembly, and an end frame coupled to the body frame and configured to cover the bus-bar frame; and a blocking member provided inside a joint between the body frame and the end frame, and configured to cover a portion of the cell assembly.

The blocking member may be provided inside the bus-bar frame.

The battery module may further include a module terminal configured to be electrically connected to the battery cell, and the blocking member may be provided on a side where the module terminal is located.

The end frame may include a main cover coupled to the body frame, and an insulating cover interposed between the main cover and the bus-bar frame, and the blocking member may be configured to be located, when the insulating cover is melted by heat and at least a portion is opened, inside the opened portion.

The blocking member may be configured in an L shape.

The blocking member may have a first portion interposed between the bus-bar frame and the cell assembly.

The blocking member may have a second portion that is bent inward from the first portion to be interposed between an upper surface of the cell assembly and the body frame.

The blocking member may be configured to partially wrap around the corner of the cell assembly.

The blocking member may include an elastic material.

The blocking member may be configured to be compressed along at least one of a longitudinal direction and a height direction of the cell assembly.

The blocking member may be configured to be compressed by the bus-bar frame.

The body frame may include a lower frame having an upper opening and configured to cover a lower surface, a left surface, and a right surface of the cell assembly, and a top plate coupled to cover the upper opening of the lower frame, and the blocking member may be configured to be compressed by the top plate.

The blocking member may have a protrusion configured such that at least a portion thereof protrudes toward the battery cell and is inserted between the battery cells.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, since the blocking member is configured to cover the empty space between the bus-bar frame and the upper surface of the body frame inside the joint between the body frame and the end frame, high-temperature gas or flame generated in the adjacent battery module can be suppressed from flowing into the empty space.

In particular, according to this aspect of the present disclosure, when a thermal event occurs in the adjacent battery module, it is possible to minimize thermal propagation into a specific battery module due to damage to the end frame or bus-bar frame by venting gas or flame heading to the specific battery module.

In addition, according to this aspect of the present disclosure, thermal runaway propagation between the battery modules can be effectively prevented or delayed. Therefore, in this case, the safety and reliability of a battery module including multiple battery cells can be guaranteed.

In addition, according to another aspect of the present disclosure, since the blocking member is compressible toward the cell assembly by the bus-bar frame or the top plate, it is possible to effectively prevent or delay thermal runaway propagation between the battery cells.

Therefore, in this case, it is possible to prevent or delay events such as fire or explosion due to thermal runaway of a battery pack including multiple battery modules or a device equipped with them.

In particular, in the case of an electric vehicle, by suppressing or delaying thermal runaway propagation between the battery cells and/or battery modules, it is possible to secure sufficient time for the occupant to evacuate or continue driving.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of main components of a battery module according to an embodiment of the present disclosure.
FIG. 3 is a side view of a battery cell included in a battery module according to an embodiment of the present disclosure.
FIG. 4 is a cross-sectional view of a portion of a battery module according to an embodiment of the present disclosure, which may be, for example, a cross-sectional view taken along line I - I' in FIG. 1.
FIG. 5 is a front perspective view illustrating the interior of a battery module in a comparative example in which a blocking member included in the battery module according to an embodiment of the present disclosure is not provided.
FIG. 6 is a front perspective view illustrating the interior of a battery module according to an embodiment of the present disclosure.
FIG. 7 is a front perspective view of a battery module according to an embodiment of the present disclosure.
FIG. 8 is a front perspective view of a blocking member included in a battery module according to an embodiment of the present disclosure.
FIG. 9 is a bottom perspective view of a blocking member included in a battery module according to an embodiment of the present disclosure.
FIG. 10 is a diagram illustrating the coupling position of a blocking member included in a battery module according to an embodiment of the present disclosure.
FIG. 11 is an exploded perspective view illustrating some components of a battery module according to an embodiment of the present disclosure.
FIG. 12 is an exploded perspective view illustrating some components of a battery module according to an embodiment of the present disclosure.
FIG. 13 is a cross-sectional view of a battery module to which a blocking member is applied according to another embodiment of the present disclosure, which may be, for example, a cross-sectional view taken along line II - II' in FIG. 1.
FIG. 14 is a cross-sectional view of a battery module, when viewed from above, according to another embodiment of the present disclosure, which may be, for example, a cross-sectional view taken along line III - III' in FIG. 1.
FIG. 15 is a diagram illustrating a state in which a blocking member included in a battery module is coupled to a bus-bar frame according to another embodiment of the present disclosure.
FIG. 16 is a schematic perspective view of a battery pack including a battery module according to an embodiment of the present disclosure.
FIG. 17 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

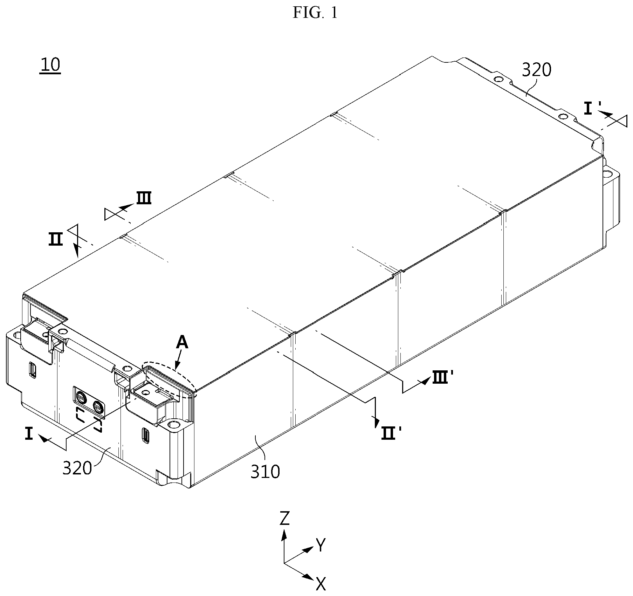

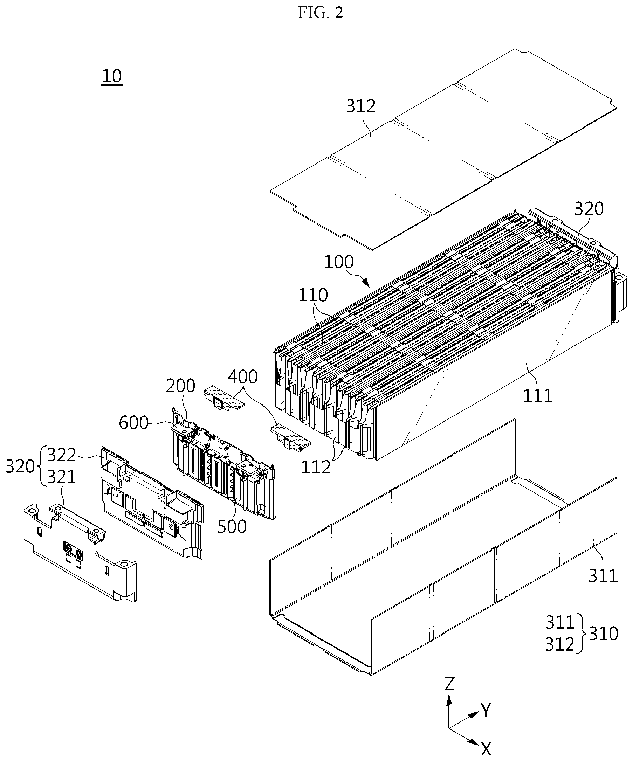

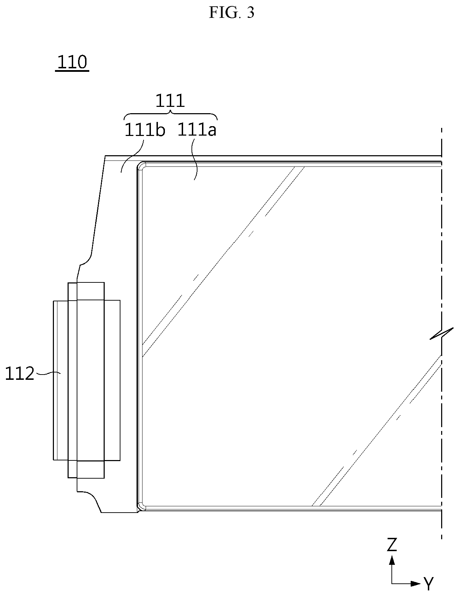

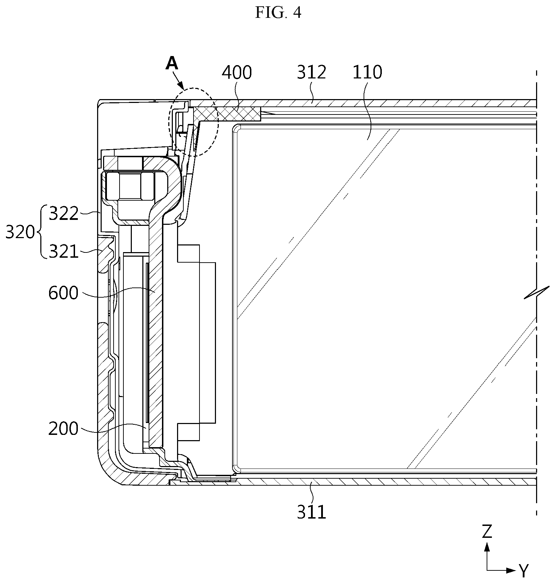

FIG. 1 is an overall perspective view of a battery module according to an embodiment of the present disclosure, and FIG. 2 is an exploded perspective view of main components of a battery module according to an embodiment of the present disclosure. FIG. 3 is a side view of a battery cell included in a battery module according to an embodiment of the present disclosure. In addition, FIG. 4 is a cross-sectional view of a portion of a battery module according to an embodiment of the present disclosure, which may be, for example, a cross-sectional view taken along line I - I' in FIG. 1.

Referring to FIGS. 1 to 4, a battery module 10 according to an embodiment of the present disclosure includes a cell assembly 100, a bus-bar frame 200, a module case 300, and a blocking member 400.

Referring to FIGS. 2 and 3, the cell assembly 100 may include a plurality of battery cells 110. The plurality of battery cells 110 may be stacked along one direction, for example, along the left-right direction.

Specifically, the battery cell 110 may include an electrode assembly, a cell case 111 that stores the electrode assembly, and an electrode lead 112 that is connected to the electrode assembly and extends outward from the cell case 111 to function as an electrode terminal.

A pair of electrode leads 112 may be provided, and the pair of electrode leads 112 may extend outward from both ends of the battery cell 110, for example, in the longitudinal direction (±Y-axis directions). In this case, the pair of electrode leads 112 may be a positive electrode lead and a negative electrode lead. The battery cell 110 may be configured such that two electrode leads 112 are located only at one end in the Y-axis direction, for example, at the end in the +Y-axis direction, as necessary.

The battery cell 110 may be a pouch-type secondary battery, as disclosed in the embodiment illustrated in FIG. 3. A cell case 111 of the pouch-type secondary battery may be configured in the form of a pouch in which a metal layer made of aluminum is interposed between polymer layers.

In this case, referring to FIG. 3, the cell case 111 may include a receiving portion 111a and a sealing portion 111b.

The receiving portion 111a may be configured to receive the electrode assembly. The receiving portion 111a may have an inner space in a concave shape facing the electrode assembly 100, and the electrode assembly 100 may be received in this inner space. In the embodiment illustrated in FIG. 3, the receiving portion 111a may be configured in the form of a double cup formed on both sides of the cell case 111.

The edges of the receiving portion 111a may be heat-welded to form a sealing portion 111b. That is, the sealing portion 111b may be provided by sealing the edges of the receiving portion 111a. As disclosed in the embodiment illustrated in FIG. 3, the sealing portion 111b may be provided on three of the four edges of the battery cell 110.

In this case, the sealing portion 111b may be configured to protrude in one direction from the receiving portion 111a. The sealing portion 111b may be configured to protrude further than the receiving portion 111a along one direction. At the end of the battery cell 110, the receiving portions 111a may be provided in close contact with each other, and a predetermined space may be formed between the sealing portions 111b. In addition, the electrode lead 112 may be configured to extend toward the front and/or rear of the sealing portion 111b of the battery cell 110. In this case, the sealing portion 111b from which the electrode lead 112 extends outward may be defined as a cell terrace.

The battery cell 110 may be provided in a standing state with the edge, which does not have the sealing portion 111b, facing downward. As illustrated in FIG. 2, a plurality of battery cells 110 may be arranged side by side in the left-right direction (X-axis direction) while standing in the vertical direction (Z-axis direction). In this case, each battery cell 110 may have sealing portions 111b facing in the front-back direction (Y-axis direction) and in the upward direction (+Z-axis direction), and a receiving portion 111a facing in the left-right direction (X-axis direction).

Meanwhile, the present disclosure is not limited to a specific type or shape of the battery cell 110, and various battery cells 110 known at the time of filing the present disclosure may be applied to configure the cell assembly of the present disclosure. In the present embodiment, although a pouch-type secondary battery with high energy density and easy stacking will be described as shown in the drawing, it is obvious that a cylindrical or prismatic secondary battery may also be applied to the battery cell 110

Referring to FIG. 2 and FIG. 4, a bus-bar frame 200 may be provided on at least one side of the cell assembly. The bus-bar frame 200 may be located on the side where the electrode lead 112 of the battery cell 110 is provided. For example, as shown in FIG. 2, the electrode lead 112 may be located at the front and rear sides of the battery cell 110, and the bus-bar frame 200 may be coupled to the front and rear sides of the cell assembly 100.

The bus-bar frame 200 may be formed of, for example, a plastic material having electrical insulation properties.

The bus-bar frame 200 may have a lead slot through which at least some of the electrode leads 112 of the plurality of battery cells 110 pass. In this case, a plurality of electrode leads 112 passing through the lead slot may be bent and stacked on each other. This stacking structure may enable the plurality of battery cells 110 to be electrically connected to each other by the electrode leads 112 in contact with each other.

The module case 300 may be configured to store the cell assembly 100 and the bus-bar frame 200. Specifically, a storage space may be formed in the module case 300, and the storage space may be configured to store the cell assembly 100. The module case 300 may be made of a metal material having rigidity and heat resistance to physically or chemically protect the stored cell assembly 100.

The module case 300 may include a body frame 310 and an end frame 320. The body frame 310 may be configured to cover some sides of the cell assembly 100. For example, the body frame 310 may be configured as a mono-frame. In this case, the body frame 310 may be configured in the form of a square tube having an upper surface, a lower surface, a left surface, a right surface, and front and rear openings. The body frame 310 may cover the remaining sides of the cell assembly 100, excluding the front and rear sides.

Alternatively, as illustrated in FIG. 2 of the present disclosure, the body frame 310 may include a lower frame 311 and a top plate 312. The lower frame 311 may be configured to allow the cell assembly 100 to be seated thereon.

Specifically, as illustrated in the drawing of the present disclosure, the lower frame 311 may be configured as a U-frame. In the case where the lower frame 311 is configured as a U-frame, it may be configured to cover both left and right sides and the lower side of the cell assembly 100. The lower frame 311 may include a left plate and a right plate covering the left and right sides of the cell assembly 100, and a lower plate covering the lower side of the cell assembly 100. In addition, the left plate, right plate, and lower plate may be configured in an integrated form. In this case, the lower frame 311 may have upper, front, and rear openings.

In the case where the lower frame 311 is configured as a U-frame, the top plate 312 may be coupled to cover the upper opening of the lower frame 311. The top plate 312 may be coupled to the lower frame 311 by welding. In this case, the top plate 312 and the lower frame 311 may be coupled to have a square tube shape with front and rear openings.

The form of the module case 300 is not limited to the above embodiment, and the module case 300 may be formed in various other forms.

Although not shown in the drawing, the module case 300 may have a venting hole enabling directional venting in one direction. For example, a plurality of venting holes may be formed in the top plate 312, and upward directional venting of the battery module 10 may be possible through the venting holes.

The end frame 320 may be configured to cover the bus-bar frame 200. The end frame 320 may be provided on the front and rear openings of the body frame 310. The end frame 320 may be coupled to the body frame 310 by welding or the like.

Meanwhile, heat energy generated by high-temperature venting gas or flame generated outside may move toward the end frame 320 and be transferred to the internal cell assembly 100. In particular, as indicated by part A in FIG. 1 and FIG. 4, there is a high risk that heat energy such as venting gas or flame may be introduced through the joint between the body frame 310 and the end frame 320. For example, as shown in FIG. 2, in the case where the end frame 320 is configured as an insulating cover 322 made of a plastic injection-molded product, the side of the insulating cover 322 exposed to the outside is vulnerable to heat, so thermal propagation may be accelerated through part A in FIG. 1. This may cause damage to the cell assembly 100 inside the module case 300.

Therefore, in order to delay thermal propagation through the joint (part A in FIG. 4) of the end frame 320 and the body frame 310, the battery module 10 according to an embodiment of the present disclosure may include a blocking member 400. The blocking member 400 may be provided inside the joint between the body frame 310 and the end frame 320. That is, the blocking member 400 may be configured to block heat such as venting gas or flame that is introduced through the joint (part A in FIG. 4) of the end frame 320 and the body frame 310. The blocking member 400 may be provided on the side where the end frame 320 is provided. As disclosed in the embodiment illustrated in FIG. 2, the blocking member 400 may be provided only on the front side.

In addition, the blocking member 400 may be configured to protect the cell assembly 100 from heat such as venting gas or flame. The blocking member 400 may be configured to cover a portion of the cell assembly 100. For example, as disclosed in the embodiments illustrated in FIG. 2 and FIG. 4, the blocking member 400 may be provided on the top of the cell assembly 100 and configured to cover a portion of the upper and front sides of the cell assembly 100.

The blocking member 400 may be made of a material having high heat resistance and/or fire resistance. For example, the blocking member 400 may include a material such as mica or a fire-resistant plastic. Accordingly, loss due to high heat such as high-temperature gas or flame may be suppressed. In addition, the blocking member 400 may be made of an electrically insulating material such as plastic.

According to the above-implemented configuration of the present disclosure, since the blocking member 400 is provided inside the joint (part A in FIG. 4) between the body frame 310 and the end frame 320, heat such as high-temperature gas or flame generated in the adjacent battery module 10 may be suppressed from being transferred to the cell assembly 100.

That is, according to this aspect of the present disclosure, thermal runaway propagation between the battery modules 10 may be effectively prevented or delayed. Therefore, in this case, the safety and reliability of the battery module 10 including multiple battery cells 110 may be ensured.

Referring to FIG. 2, the battery module 10 according to an embodiment of the present disclosure may include a plurality of bus-bars 500. The plurality of bus-bars 500 may be configured to connect the battery cells 110 in series and/or in parallel.

In addition, through this electrical connection, the bus-bar 500 may be configured to transmit status information about the battery cells 110 to an external element. For example, the bus-bar 500 may be configured to transmit voltage information of the battery cells 110 to an external control device such as a BMS (Battery Management System).

The bus-bar 500 may be coupled to the outer surface of the bus-bar frame 200. In addition, the bus-bar 500 may be located further inward than the electrode leads 112. Specifically, the electrode leads 112 of the battery cells 110 may pass through the lead slots of the bus-bar frame 200 to extend outside the bus-bar frame 200, and the extending portions may be attached to the surface of the bus-bar 500 by welding or the like.

The bus-bar 500 may be made of a metal material such as copper, aluminum, nickel, or the like. In addition, the bus-bar 500 may be configured in the form of a bar extending in the height direction.

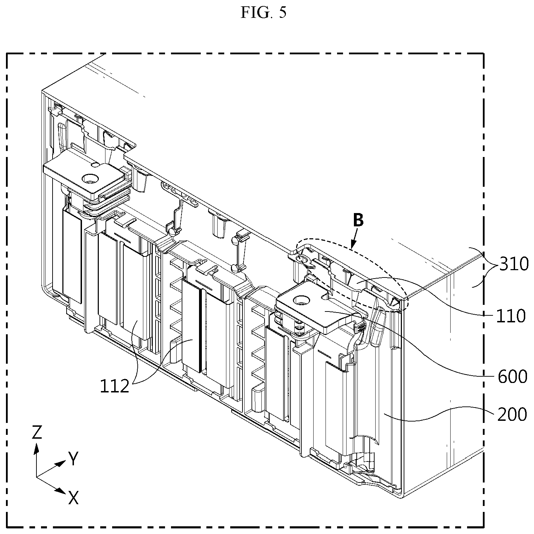

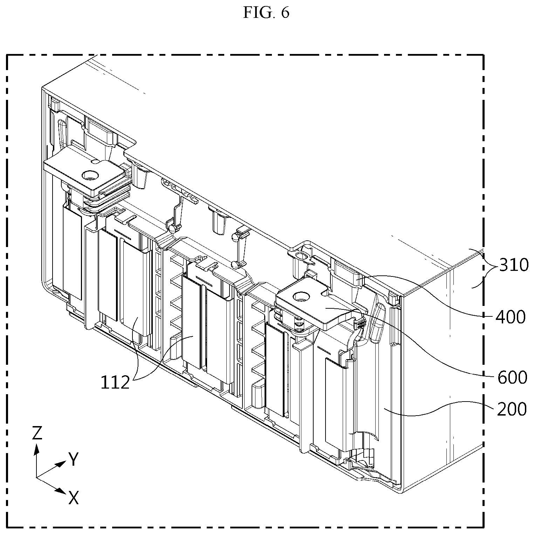

FIG. 5 is a front perspective view illustrating the interior of a battery module in a comparative example in which a blocking member included in the battery module according to an embodiment of the present disclosure is not provided. In addition, FIG. 6 is a front perspective view illustrating the interior of a battery module according to an embodiment of the present disclosure.

Components of the battery module 10, such as the bus-bar frame 200 and the cell assembly 100, may be located inside the joint between the body frame 310 and the end frame 320. In particular, referring to part B in FIG. 5, the bus-bar frame 200 and the upper surface of the body frame 310 may be configured to be spaced a predetermined distance apart from each other. Accordingly, in the case where the blocking member 400 according to the present disclosure is not provided, venting gas or flames introduced from the outside through the joint between the body frame 310 and the end frame 320 may move toward the cell assembly 100 through the gap (part B in FIG. 5) between the bus-bar frame 200 and the upper surface of the body frame 310.

However, as disclosed in the embodiment illustrated in FIG. 6, the blocking member 400 according to an embodiment of the present disclosure may be configured to cover the gap (part B in FIG. 5) between the bus-bar frame 200 and the upper surface of the body frame 310. In particular, the blocking member 400 may be provided on the inner side (rear side) of the bus-bar frame 200. That is, the blocking member 400 may be provided in the empty space between the cell assembly 100 and the bus-bar frame 200.

According to the above-implemented configuration of the present disclosure, since the blocking member 400 is configured to cover the empty space (part B in FIG. 5) between the bus-bar frame 200 and the upper surface of the body frame 310 inside the joint between the body frame 310 and the end frame 320, high-temperature gas or flame generated from the outside may be suppressed from flowing into the empty space. As a result, high-temperature venting gas or flames flowing in from the outside may be prevented from directly moving toward the cell assembly 100, thereby minimizing thermal propagation between the battery modules 10.

In addition, referring to FIG. 6, the battery module 10 according to an embodiment of the present disclosure may further include a module terminal 600. The module terminal 600 may be configured to be electrically connected to the electrode lead 112 of the battery cell 110. The module terminal 600 may include a positive electrode terminal and a negative electrode terminal. In addition, the module terminal 600 may be configured to be electrically or communicatively connected to a control device such as a BMS.

The module terminal 600 may be provided on the side from which the electrode lead 112 of the battery cell 110 extends outward. For example, the module terminal 600 may be provided on the front side of the module case 300. The module terminal 600 may be provided on the outer side of the bus-bar frame 200. Two module terminals 600 may be provided on the front left and right sides of the front end frame 320. For example, the module terminal 600 may be two bus-bars 500 provided on the outermost side, among a plurality of bus-bars 500.

In addition, the module terminal 600 may be configured such that at least a portion protrudes outside the end frame 320. In this case, the end frame 320 may have a hole configured such that the module terminal 600 passes therethrough.

In this case, the blocking member 400 may be provided inside (on the rear) of the bus-bar frame 200 where the module terminal 600 is located. The blocking member 400 may be located above the module terminal 600.

According to the above-implemented configuration of the present disclosure, damage to the electrode lead 112 connected to the module terminal 600 may be minimized. In addition, according to the above-implemented configuration of the present disclosure, the blocking member 400 is provided to the side of the module terminal 600, so that venting gas or flame generated inside the battery module 10 may be suppressed from moving beyond the bus-bar frame 200 toward the module terminal 600.

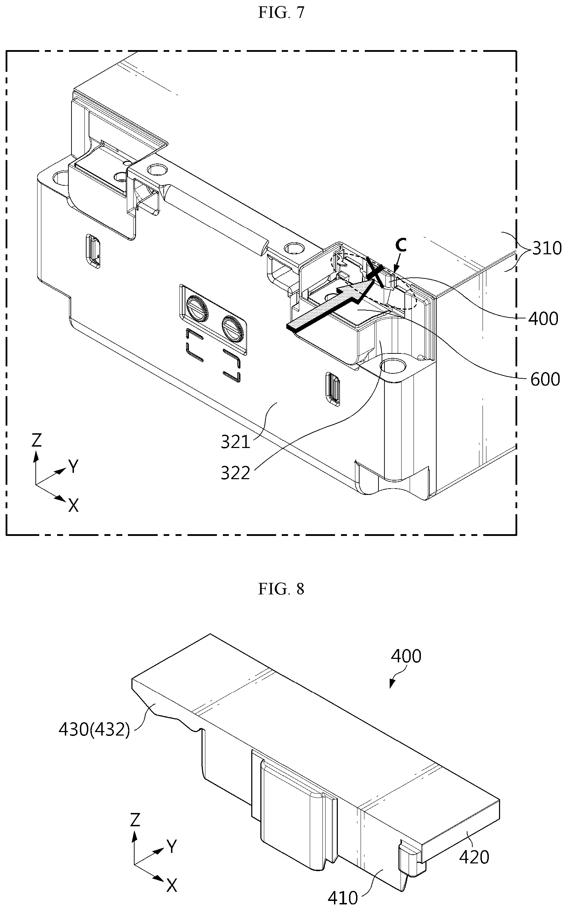

FIG. 7 is a front perspective view of a battery module according to an embodiment of the present disclosure.

Meanwhile, referring to FIG. 7, the end frame 320 may have a main cover 321 and an insulating cover 322. The main cover 321 may be coupled to the body frame 310.

The insulating cover 322 may be provided inside the main cover 321. The insulating cover 322 may be interposed between the main cover 321 and the bus-bar frame 200. The insulating cover 322 may be assembled to the body frame 310 and the bus-bar frame 200, along with the main cover 321. In addition, the insulating cover 322 may have a hole configured to allow the module terminal 600 to pass therethrough to the outside.

The insulating cover 322 may be formed of a material having electrical insulation properties and configured to electrically insulate the main cover 321 from the bus-bar 500 or electrode lead 112. For example, the main cover 321 may be formed of a metal material such as aluminum, and the insulating cover 322 may be formed of plastic. In particular, the insulating cover 322 may be configured to wrap around a portion of the module terminal 600 that is exposed to the outside.

More specifically, the insulating cover 322 may be configured to wrap around the module terminal 600 in order to expose the module terminal 600 to the outside in the front of the battery module 10 equipped with the module terminal 600. In this case, in order to ensure that the upper portion of the module terminal 600 is secured to the insulating cover 322, the upper portion of the body frame 310 may be configured to have a portion cut inward. As a result, only portions of the upper, left, and right sides of the main cover 321 may be connected to the body frame 310, and the insulating cover 322 may be connected to the remaining portions of the body frame 310 to which the main cover 321 is not connected.

In this case, as shown in part C in FIG. 7, the insulating cover 322 is formed of a plastic injection-molded product that is vulnerable to heat, and thus its part may be melted by high-temperature venting gas or flames inside and outside. Accordingly, as shown in FIG. 5, in the case where the blocking member 400 is not configured, venting gas or flames may flow into the gap between the bus-bar frame 200 and the upper surface of the body frame 310 and move toward the cell assembly 100.

However, in an embodiment of the present disclosure, when the insulating cover 322 is melted by heat such as gas or flame and at least partially opened, the blocking member 400 may be configured to be located inside the open portion (see part C in FIG. 7). That is, the blocking member 400 may be provided in the flow path of venting gas or flame flowing in from the outside to the cell assembly 100.

According to the above-implemented configuration of the present disclosure, when a thermal event occurs outside, it is possible to minimize damage to the end frame 320 or the bus-bar frame 200 due to heat such as venting gas or flame, and thermal propagation to the inside of the battery module 10. That is, according to the above-implemented configuration of the present disclosure, as indicated by the arrow in FIG. 7, the blocking member 400 may block the flow path of venting gas or flame, thereby minimizing venting gas or flame introduced from the outside through the open portion from moving toward the cell assembly 100.

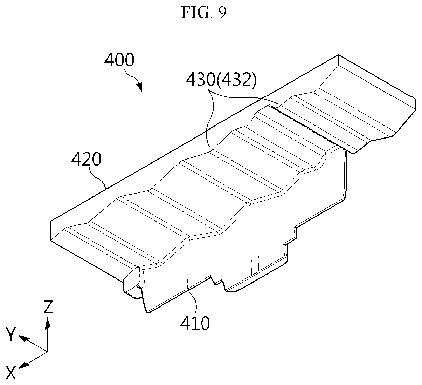

The detailed structure of the blocking member 400 will be described with reference to FIGS. 8 and 9.

FIG. 8 is a front perspective view of a blocking member included in a battery module according to an embodiment of the present disclosure, and FIG. 9 is a bottom perspective view of a blocking member included in a battery module according to an embodiment of the present disclosure.

Referring to FIGS. 8 and 9, the blocking member 400 may be configured in an L shape. That is, the blocking member 400 may be configured in a single-bent shape. That is, the blocking member 400 may have a portion extending in the horizontal direction (front-back direction) and a portion extending in the vertical direction (height direction).

More specifically, the blocking member 400 may have a first portion 410 and a second portion 420. The first portion 410 may indicate a portion extending in the vertical direction. The first portion 410 may be interposed between the bus-bar frame 200 and the cell assembly 100. The first portion 410 may be configured to cover the front side of the cell assembly 100. Accordingly, it may directly block venting gas or flames flowing into the front side of the cell assembly 100 beyond the bus-bar frame 200.

In addition, the second portion 420 may be configured by being bent inward from the first portion 410. The second portion 420 may indicate a portion extending in the horizontal direction. The first portion 410 and the second portion 420 may be configured to be approximately perpendicular to each other. The second portion 420 may be interposed between the upper surface of the cell assembly 100 and the body frame 310. The second portion 420 may be configured to cover the top of the cell assembly 100. Accordingly, venting gas or flames introduced through the upper surface of the cell assembly 100 beyond the bus-bar frame 200 may be blocked.

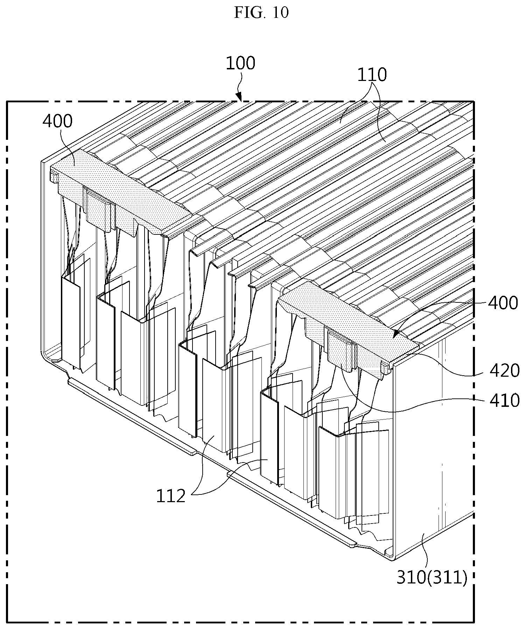

FIG. 10 is a diagram illustrating the coupling position of a blocking member included in a battery module according to an embodiment of the present disclosure.

Referring to FIG. 10, the joint structure between the blocking member 400 and the cell assembly 100 will be described. The blocking member 400 may be configured to partially wrap around the corner of the cell assembly 100. The blocking member 400 may be disposed on the top of the cell assembly 100. That is, the blocking member 400 may be configured to be seated on the cell assembly 100. For example, as disclosed in the embodiment illustrated in FIG. 10, the blocking member 400 may be configured in an L shape to wrap around a portion of the upper edge on the front side of the cell assembly 100. Thus, the blocking member 400 may be configured to cover portions of the front side and the upper side of the cell assembly 100.

According to the above-implemented configuration of the present disclosure, the blocking member 400 may block venting gas or flame flowing into the space between the bus-bar frame 200 and the body frame 310 and moving toward the front side of the cell assembly 100. In addition, according to the above-implemented configuration of the present disclosure, since the blocking member 400 is seated on the top of the cell assembly 100, the blocking member 400 may be prevented from being separated from the cell assembly 100. Accordingly, even if vibration or impact acts on the battery module 10, the blocking member 400 may be configured to stably wrap the cell assembly 100.

In addition, the blocking member 400 may include a material having elasticity. For example, the blocking member 400 may be made of a material such as silicone or polyurethane. If the blocking member 400 is made of an elastic material, the sealing effect of the blocking member 400 on the corner of the cell assembly 100 may be further improved. In particular, according to the above-implemented configuration of the present disclosure, the compression state may be uniformly maintained even in a complex structure or shape inside the bus-bar frame 200. In this case, the blocking member 400 may more reliably pressurize the cell assembly 100, thereby certainly preventing venting gas or flames from moving toward the battery cell 110.

In addition, according to the above-implemented configuration of the present disclosure, while securing structural rigidity in a portion where the blocking member 400 comes into contact with the bus-bar frame 200 or the body frame 310, damage to the battery cell 110 may be minimized in a portion where the blocking member 400 comes into direct contact with the battery cell 110.

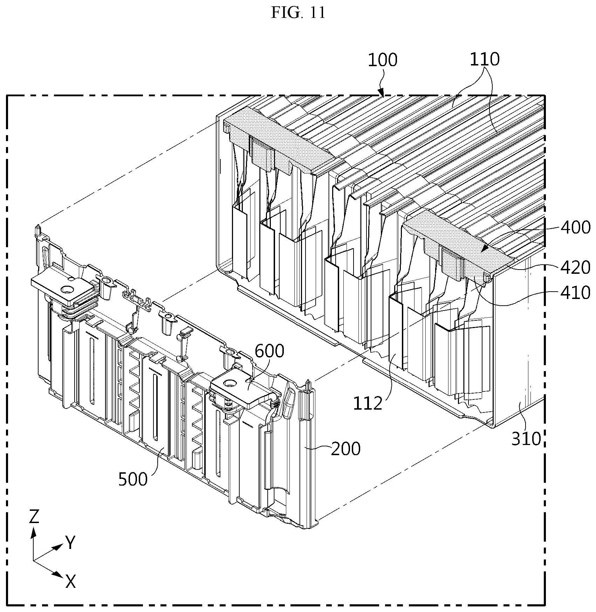

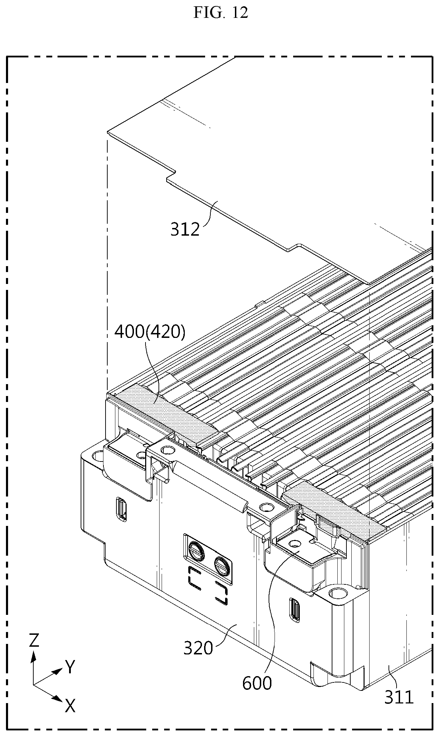

FIGS. 11 and 12 are exploded perspective views illustrating some components of a battery module according to an embodiment of the present disclosure.

As described above, since the blocking member 400 includes a material having elasticity, the blocking member 400 may be configured to be compressed toward the cell assembly 100. More specifically, the blocking member 400 may be configured to be compressed along at least one of the longitudinal direction and the height direction of the cell assembly 100. For example, the blocking member 400 may be configured to be compressed by at least one of the bus-bar frame 200 and the body frame 310 provided on the outside.

As a more specific example, referring to FIG. 11, the first portion 410 may be configured to be compressed by the bus-bar frame 200. That is, as the bus-bar frame 200 is coupled to the cell assembly 100, the first portion 410 may be configured to be compressed toward the front side of the cell assembly 100 by the bus-bar frame 200.

In addition, referring to FIG. 12, in the case where the lower frame 311 is configured as a U-frame, as the top plate 312 is coupled to the lower frame 311, the second portion 420 may be configured to be compressed downward by the top plate 312.

According to the above-implemented configuration of the present disclosure, the blocking member 400 may be configured to be more closely pressed toward the upper front edge of the cell assembly 100 by at least one of the bus-bar frame 200 and the body frame 310. In this case, the blocking member 400 may more reliably pressurize the cell assembly 100 to more certainly prevent venting gas or flame from flowing into the gap between the blocking member 400 and the cell assembly 100.

In addition, since the blocking member 400 is compressed when at least one of the bus-bar frame 200 and the top plate 312 is coupled, the fixing force between the blocking member 400 and the cell assembly 100 may be improved. In addition, the assemblability may be improved during the manufacturing process of the battery module 10.

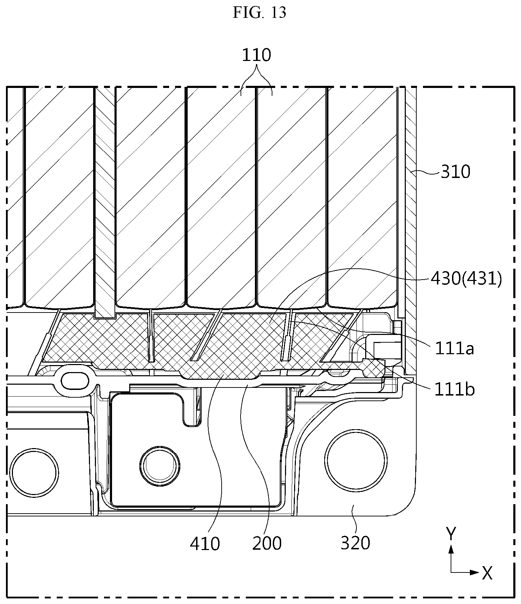

FIG. 13 is a cross-sectional view of a battery module to which a blocking member is applied according to another embodiment of the present disclosure, which may be, for example, a cross-sectional view taken along line II - II' in FIG. 1.

The blocking member 400 may have a protrusion 430. The protrusion 430 may be configured such that at least a portion of the blocking member 400 protrudes toward the battery cell 110. A plurality of protrusions 430 may be provided. In addition, the protrusion 430 may be configured to be inserted into a space between at least some of the plurality of battery cells 110. Accordingly, the blocking member 400 may be supported by the battery cells 110. According to the above-implemented configuration of the present disclosure, since the protrusion 430 is provided, movement or deformation of the blocking member 400 may be suppressed.

For example, as disclosed in the embodiment illustrated in FIG. 13, the blocking member 400 may include a first protrusion 431 provided in the first portion 410. That is, the first protrusion 431 may be provided on the front side of the battery cell 110 by a part of the first portion 410 protruding toward the rear side. Accordingly, the first protrusion 431 may be configured to be at least partially inserted between the battery cells 110 on the side where the electrode lead 112 of the battery cell 110 is provided.

More specifically, the first protrusion 431 may be configured to be interposed at least partially between the sealing portions 111b on the front side of the battery cell 110. Furthermore, the first protrusion 431 may be configured to fill the space between adjacent cell terraces.

According to the above-implemented configuration of the present disclosure, the blocking member 400 may be coupled such that it is inserted into the space between the battery cells 110 by the first protrusion 431. When a thermal event occurs in a battery cell 110 and venting gas is generated, the venting gas or the like is highly likely to move to the electrode lead 112 and thus the cell terrace will open. However, according to the above-implemented configuration of the present disclosure, since the first protrusion 431 fills the space between the cell terraces of the battery cells 110, the pressure of the venting gas concentrated on the cell terrace may be minimized, thereby suppressing or blocking the venting gas from being discharged to the side where the electrode lead 112 of the battery cell 110 is provided.

In addition, in the above-implemented configuration, even if the venting gas or flame is discharged through the space between the sealing portions 111b, the adverse effects due to the venting gas or flame may not be transmitted to other battery cells 110 separated by the first protrusions 431.

Therefore, according to the above-implemented configuration, by preventing adjacent battery cells 110 from being affected by thermal damage, thermal propagation between the battery cells 110 may be suppressed, and thermal runaway in the battery module may be delayed. Therefore, according to the above aspect of the present disclosure, the safety and reliability of the battery module 10 may be ensured.

Furthermore, the first protrusion 431 may be made of an elastic body and have a shape and size corresponding to the space between the cell terraces. According to an embodiment, the area and shape of the first protrusion 431 may be configured to be identical or similar to the area and shape of the space between the cell terraces. For example, the first protrusion 431 may be configured to be inclined along the direction in which the sealing portion 111b and the electrode lead 112 are formed. As a result, the first protrusion 431 may have a trapezoidal shape having the same size and shape as the space between the sealing portions 111b when viewed from above.

According to the above-implemented configuration of the present disclosure, since the first protrusion 431 corresponds to the shape of the sealing portion 111b or the electrode lead 112, it is possible to minimize excessive deformation or damage of the sealing portion 111b or the electrode lead 112 by the first protrusion 431.

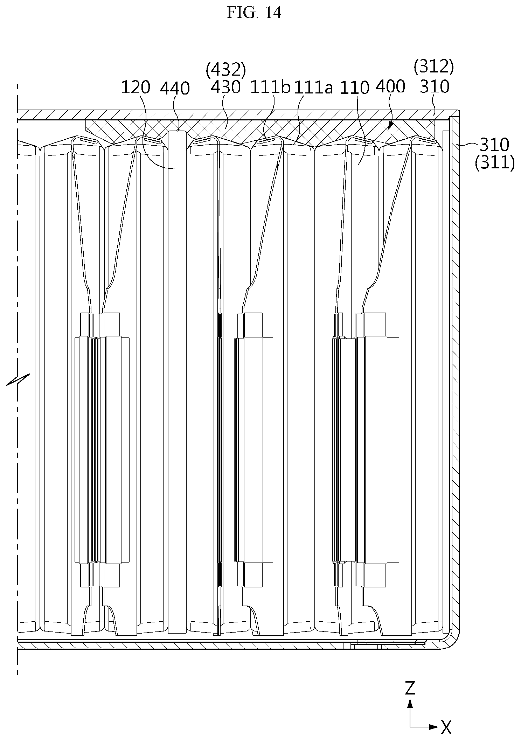

FIG. 14 is a cross-sectional view of a battery module, when viewed from above, according to another embodiment of the present disclosure, which may be, for example, a cross-sectional view taken along line III - III' in FIG. 1.

As another embodiment, as disclosed in the embodiment illustrated in FIG. 9 and FIG. 14, the blocking member 400 may include a second protrusion 432 provided in the second portion 420. That is, the second protrusion 432 may be provided on the top of the cell assembly 100 by a part of the second portion 420 protruding downward.

In this case, as disclosed in the embodiment illustrated in FIG. 14, the second protrusion 432 may be configured to be inserted at least partially between the battery cells 110 from the top of the battery cells 110. For example, the second protrusion 432 may be configured to be interposed at least partially between the receiving portions 111a of the battery cell 110.

Furthermore, the second protrusion 432 may be configured to be in contact with the upper surface of the cell assembly 100. That is, the second protrusion 432 may be configured to be seated on the receiving portion 111a of the battery cell 110. In addition, the second protrusion 432 may be configured to press the upper side of the receiving portion 111a of the battery cell 110 downward.

According to the above-implemented configuration of the present disclosure, the empty space between the battery cells 110 may be filled with the second protrusion 432 at the top of the cell assembly 100. When a thermal event occurs in a battery cell 110 and venting gas is generated, high-temperature venting gas or flame is highly likely to move upward. However, in the case of the above-implemented configuration, even if the venting gas or flame is discharged upward, the adverse effects due to the venting gas or flame may not be transmitted to other battery cells 110 separated by the second protrusions 432.

Therefore, according to the above-implemented configuration, by preventing adjacent battery cells 110 from being affected by thermal damage, thermal propagation between the battery cells 110 may be suppressed, and thermal runaway in the battery module may be delayed. Therefore, according to the above aspect of the present disclosure, the safety and reliability of the battery module 10 may be ensured.

In addition, according to the above-implemented configuration of the present disclosure, since the protrusion 430 is provided, the blocking member 400 may be suppressed from moving or deforming in the left-right direction.

Furthermore, the second protrusion 432 may be configured to correspond to the shape of the sealing portion 111b (folding portion) located on the upper surface of the battery cell 110. According to the above-implemented configuration of the present disclosure, since the second protrusion 432 corresponds to the shape of the upper surface of the cell assembly 100, the upper sealing portion 111b (folding portion) may be minimized from being excessively deformed or damaged by the second protrusion 432.

Referring to FIG. 14, the cell assembly 100 according to an embodiment of the present disclosure may further include a partition member 120. The partition member 120 may be provided between the battery cells 110. At least one partition member 120 may be included in one battery module 10. A plurality of partition members 120 may be provided along one direction in which the battery cells 110 are arranged. The partition member 120 may be provided for each group of one or more battery cells 110.

In particular, the partition member 120 may be configured to partition the plurality of battery cells 110. The partition member 120 may be configured to group the plurality of battery cells 110. For example, as illustrated in FIG. 14, the partition member 120 may be disposed for each group of four battery cells 110, so that battery cells 110 may be grouped in groups of four.

The partition member 120 may be configured as an insulating pad that is thinner than the battery cell 110. The partition member 120 may be formed of a material having excellent heat resistance and/or fire resistance. Alternatively, the partition member 120 may be configured as a compressible pad made of, for example, a material such as silicone or aerogel.

According to the above-described embodiment of the present disclosure, the battery cells 110 may be partitioned or divided to prevent gas or flames from being transferred to other partition members 120 adjacent to the partition member 120. In addition, according to the above-described embodiment of the present disclosure, the partition member 120 may contribute to the structural rigidity of the battery cells 110 by compressing the battery cells 110 when the battery cells 110 swells.

In this case, in order to improve the fixing force between the blocking member 400 and the partition member 120, the blocking member 400 may be configured such that the distal end of the partition member 120 is inserted thereinto.

More specifically, referring to FIG. 14, the blocking member 400 may be configured with a fixing groove 440 formed by at least a portion being recessed inward. The partition member 120 may be inserted into the fixing groove 440. Accordingly, the upper end of the partition member 120 may come into close contact with the fixing groove 440 without a gap.

According to the above-implemented configuration of the present disclosure, since the partition member 120 may be inserted into the blocking member 400 and supported from both sides, the fixing force between the partition member 120 and the blocking member 400 may be further improved. As a result, the arrangement state of the battery cells 110 and the partition members 120 may be stably maintained.

In addition, the sealing power between the end of the partition member 120 and the blocking member 400 may be stably secured. Therefore, according to the above-implemented configuration, the plurality of battery cells 110 may be more reliably partitioned, and thus the thermal propagation prevention performance between the battery cells 110 may be further improved.

Furthermore, according to the above-implemented configuration of the present disclosure, it is possible to reduce the possibility that the high-temperature and high-pressure venting gas or flame pushes out the partition member 120 or that the partition member 120 is bent and deformed by the internal pressure of the venting gas so that the heat is transferred to another battery cell 110. Therefore, when the thermal runaway propagation of the battery module 10 occurs, the thermal runaway propagation between the battery cells 110 may be effectively prevented or delayed.

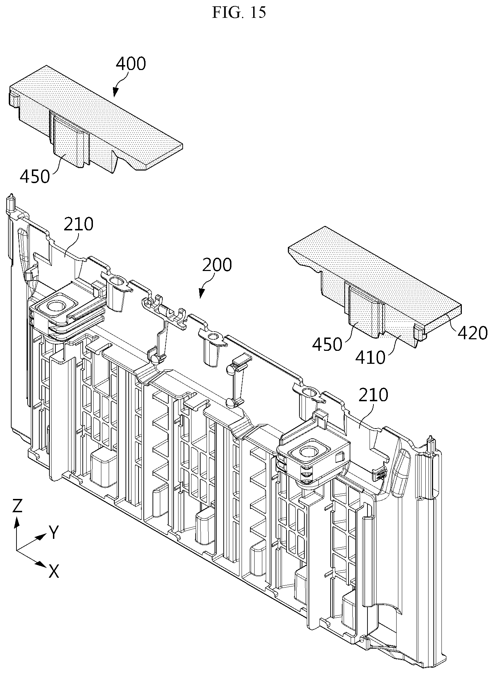

FIG. 15 is a diagram illustrating a state in which a blocking member included in a battery module is coupled to a bus-bar frame according to another embodiment of the present disclosure.

The coupling structure between the blocking member 400 and the bus-bar frame 200 will be described with reference to FIG. 15. The blocking member 400 and the bus-bar frame 200 may be configured to be inserted and fitted into each other. The blocking member 400 may be configured to be at least partially inserted into the bus-bar frame 200.

More specifically, referring to FIG. 15, the bus-bar frame 200 may have an insertion portion 210 configured such that at least a portion of the blocking member 400 is inserted and fitted thereinto. The insertion portion 210 may be configured to protrude outward from the bus-bar frame 200. In addition, the blocking member 400 may have a coupling portion 450 configured to be inserted and fitted into the insertion portion 210. In this case, the coupling portion 450 may be configured to be fitted into the insertion portion 210. That is, the coupling portion 450 may be configured to correspond to the shape and size of the insertion portion 210. In addition, the coupling portion 450 may be formed at a location where the insertion portion 210 is provided.

According to the above-implemented configuration of the present disclosure, since the coupling portion 450 of the blocking member 400 is fitted into the bus-bar frame 200, the coupling force or fixing force between the blocking member 400 and the bus-bar frame 200 may be improved. In particular, since the coupling portion 450 of the blocking member 400 is supported in the left-right direction by the insertion portion 210, the blocking member 400 may be suppressed from moving in the left-right direction. Accordingly, the structural stability of the blocking member 400 may be secured.

Furthermore, the blocking member 400 may be configured to be vertically coupled to the bus-bar frame 200. That is, the blocking member 400 may be configured to be coupled to the bus-bar frame 200 downward from above. The insertion portion 210 of the bus-bar frame 200 may be configured to guide the vertical coupling position of the blocking member 400. That is, the coupling portion 450 of the blocking member 400 may be configured to be caught on the lower portion of the insertion portion 210. According to the above-implemented configuration of the present disclosure, the blocking member 400 may be suppressed from moving downward as well as left and right.

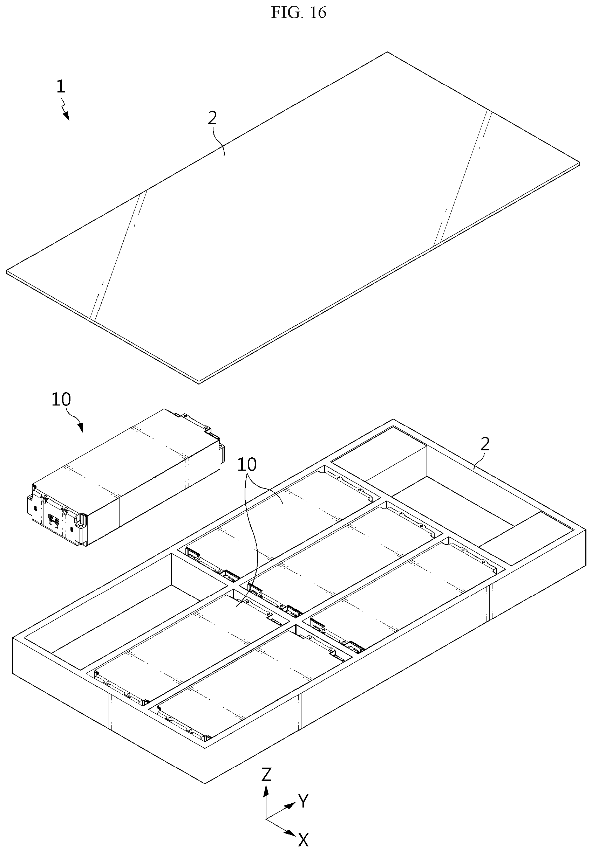

FIG. 16 is a schematic perspective view of a battery pack including a battery module according to an embodiment of the present disclosure.

Referring to FIG. 16, a battery pack 1 according to an embodiment of the present disclosure may include one or more battery modules 10 according to an embodiment of the present disclosure described above. The battery pack 1 according to the present disclosure may further include a pack case 2 for storing a BMS (Battery Management System), a current sensor, a fuse, and the like for integrated control of charging and discharging of one or more battery modules, and the components described above.

The battery pack 1 according to the present disclosure is configured with a battery module 10 including the blocking member 400, thereby blocking venting gas or flames discharged from the battery cell 110 from moving toward the end frame 320 of an adjacent battery module 10, so that thermal runaway between the battery modules 10 may be prevented or delayed. As a result, the safety of the battery pack 1 may be ensured.

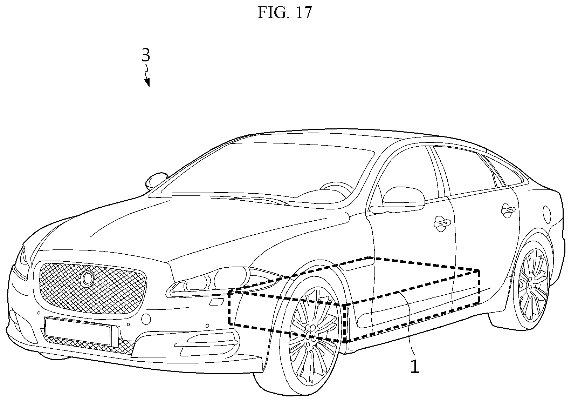

FIG. 17 is a schematic perspective view of a vehicle including a battery pack according to an embodiment of the present disclosure.

Referring to FIG. 17, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a fourwheel vehicle and a two-wheel vehicle. The vehicle 3 operates by power supplied from the battery pack 1 or the battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a cell assembly comprising a plurality of battery cells;
a bus-bar frame provided on at least one side of the cell assembly;
a module case comprising a body frame configured to cover some sides of the cell assembly, and an end frame coupled to the body frame and configured to cover the bus-bar frame; and
a blocking member provided inside a joint between the body frame and the end frame, and configured to cover a portion of the cell assembly.

2. The battery module according to claim 1,
wherein the blocking member is provided inside the bus-bar frame.

3. The battery module according to claim 1,
further comprising a module terminal configured to be electrically connected to the battery cell,
wherein the blocking member is provided on a side where the module terminal is located.

4. The battery module according to claim 1,
wherein the end frame comprises
a main cover coupled to the body frame, and an insulating cover interposed between the main cover and the bus-bar frame, and
wherein the blocking member is configured to be located, when the insulating cover is melted by heat and at least a portion is opened, inside the opened portion.

5. The battery module according to claim 1,
wherein the blocking member is configured in an L shape.

6. The battery module according to claim 1,
wherein the blocking member has a first portion interposed between the bus-bar frame and the cell assembly.

7. The battery module according to claim 6,
wherein the blocking member has a second portion that is bent inward from the first portion to be interposed between an upper surface of the cell assembly and the body frame.

8. The battery module according to claim 1,
wherein the blocking member is configured to partially wrap around the corner of the cell assembly.

9. The battery module according to claim 1,
wherein the blocking member comprises an elastic material.

10. The battery module according to claim 1,
wherein the blocking member is configured to be compressed along at least one of a longitudinal direction and a height direction of the cell assembly.

11. The battery module according to claim 1,
wherein the blocking member is configured to be compressed by the bus-bar frame.

12. The battery module according to claim 1,
wherein the body frame comprises
a lower frame having an upper opening and configured to cover a lower surface, a left surface, and a right surface of the cell assembly, and
a top plate coupled to cover the upper opening of the lower frame, and
wherein the blocking member is configured to be compressed by the top plate.

13. The battery module according to claim 1,
wherein the blocking member has a protrusion configured such that at least a portion thereof protrudes toward the battery cell and is inserted between the battery cells.

14. A battery pack comprising a battery module according to any one of claims 1 to 13.

15. A vehicle comprising a battery module according to any one of claims 1 to 13.
